# EUROPEAN PATENT SPECIFICATION

(11) **EP 3 029 130 B1**
(45) Date of publication and mention of the grant of the patent: **05.09.2018**
(21) Application number: 14832280.3
(22) Date of filing: 31.07.2014
(51) Int. Cl.: C10B 39/02

(54) **COKE DRY-QUENCHING DEVICE AND COKE DRY-QUENCHING METHOD**
KOKSTROCKENLÖSCHVORRICHTUNG UND KOKSTROCKENLÖSCHVERFAHREN
DISPOSITIF D'EXTINCTION À SEC DU COKE ET PROCÉDÉ ASSOCIÉ

(30) Priority: 01.08.2013 JP 2013160532
(43) Date of publication of application: 08.06.2016
(73) Proprietor: Nippon Steel & Sumikin Engineering Co., Ltd., Tokyo 141-8604 (JP); NS Plant Designing Corporation, Fukuoka 804-0002 (JP)
(72) Inventor: TABATA, Kohji, Tokyo 141-8604 (JP); FUJIKAWA, Atsushi, Tokyo 141-8604 (JP); OKAMOTO, Hirofumi, Kitakyusyu-city Fukuoka 804-0002 (JP); OOTANI, Hiroshi, Kitakyusyu-city Fukuoka 804-0002 (JP)
(74) Representative: Grünecker Patent- und Rechtsanwälte PartG mbB
(86) International application number: PCT/JP2014/070266
(87) International publication number: WO 2015/016327

(56) References cited:
- JP-A- 2002 256 270
- JP-A- 2004 067 825
- JP-B2- S5 743 193
- JP-B2- S5 844 104
- JP-Y2- S6 011 073

## Description

### Technical Field

The present invention relates to a coke dry-quenching device and a coke dry-quenching method.

### Background Art

Examples of a device that cools red-hot coke discharged from a coke oven include a known coke dry-quenching device. Specific examples of the coke dry-quenching device include a device including a cooling chamber, a boiler, first and second gas lines, a bypass line, a diffusion line, and an assisting gas line. The cooling chamber accepts red-hot coke, cools the red-hot coke by using a cooling gas, and discharges the cooled coke. The boiler recovers energy from heat that the red-hot coke generates. The first gas line guides the cooling gas having passed through the coke in the cooling chamber to the boiler. The second gas line guides the cooling gas having passed through the boiler to the cooling chamber. The bypass line guides part of the cooling gas passing through the second gas line to the first gas line without passing through the cooling chamber to lower the temperature of the gas in the first gas line. The diffusion line guides part of the cooling gas passing through the second gas line to the outside to adjust the pressure in a pre-chamber. The assisting gas line guides a combustion assisting gas containing oxygen to the first gas line to raise the gas temperature in the first gas line.

A coke dry-quenching device is required to reliably cool red-hot coke and generate an appropriate amount of steam from the boiler. It is further required to suppress an increase in CO concentration in the cooling gas while maintaining the gas temperature in the first gas line at a fixed value. To satisfy the requirements, an operator needs to monitor and adjust the temperature of the coke discharged from the cooling chamber (hereinafter referred to as "discharged coke temperature"), the gas temperature in the first gas line (hereinafter referred to as "boiler-inlet gas temperature"), the CO concentration in the cooling gas (hereinafter referred to as "CO concentration"), the amount of steam that the boiler generates (hereinafter referred to as "generated steam amount"), and other parameters.

These parameters can be achieved, for example, by appropriate adjustment of the gas flow rate in the second gas line, specifically, the gas flow rate in a position upstream of a blower (hereinafter referred to as "circulation flow rate"), the gas flow rate in the bypass line (hereinafter referred to as "bypass flow rate"), the gas flow rate in the assisting gas line (hereinafter referred to as "assisting gas flow rate"), the gas flow rate in the diffusion line (hereinafter referred to as "diffusion flow rate"), and other parameters. Some of the flow rates affect two or more of the parameters. For example, the circulation flow rate affects the discharged coke temperature and the amount of generated steam. The bypass flow rate affects the boiler-inlet gas temperature and the circulation flow rate, that is, the discharged coke temperature and the generated steam amount. The diffusion flow rate affects the circulation flow rate, that is, the discharged coke temperature and the generated steam amount. The assisting gas flow rate affects not only the CO concentration but also the boiler-inlet gas temperature and the circulation flow rate, that is, the discharged coke temperature and the generated steam amount. Adjustment of one of the parameters therefore affects other parameters. It is therefore difficult to automate the adjustment of the parameters described above, and the adjustment is a big burden even on a skilled operator. In view of the circumstances described above, Patent Literature 1 discloses a method for automatically controlling the amount of diluted air (assisting gas flow rate) and the flow rate of a circulating gas (circulation flow rate). Patent Literature 2 discloses a method of controlling the heat transfer to a boiler tube. In Patent Literature 3 and 4, methods of adjusting the temperature of discharged coke by controlling a circulation flow rate are disclosed. Further coke dry-quenching devices are disclosed in Patent Literature 5 and 6.

### Citation List

### Patent Literature

Patent Literature 1: Japanese Unexamined Patent Publication No. S63-314294
Patent Literature 2: JP 2002-256270 A
Patent Literature 3: JP 2004-067825 A
Patent Literature 4: JP S5 8-44104 B2
Patent Literature 5:JP S60-11072 Y2
Patent Literature 6: JP S57- 43193 B2

### Summary of Invention

### Technical Problem

Even when the automatic control method described above is employed, however, a skilled operator still needs to monitor and adjust the parameters described above, and it is therefore difficult to reduce the burden on the operator. For example, in the automatic control method described above, the assisting gas flow rate is determined on the basis of the amount of coke discharged from the cooling chamber (hereinafter referred to as "discharged coke amount"), but the assisting gas is supplied in order to adjust the CO concentration, which varies due to a variety of factors in addition to the discharged coke amount. It is therefore necessary to monitor the CO concentration and manually adjust the assisting gas flow rate in accordance with variation in the CO concentration. The adjustment of the assisting gas flow rate also affects the boiler-inlet gas temperature and the generated steam amount. It is therefore necessary to monitor the boiler-inlet gas temperature and the generated steam amount and further manually adjust the bypass flow rate in accordance with variations in the boiler-inlet gas temperature and the generated steam amount. When the assisting gas flow rate and the bypass flow rate change, the amount of gas flowing into the cooling chamber (hereinafter referred to as "chamber inlet flow rate") changes in accordance with the changes. The adjustment of the assisting gas flow rate and the bypass flow rate therefore also affects the discharged coke temperature. It is therefore necessary to monitor the discharged coke temperature and manually adjust the circulation flow rate or the diffusion flow rate in such a way that variation in the discharged coke temperature is suppressed.

An object of the present invention is to provide a coke dry-quenching device and a coke dry-quenching method that allow reduction in burden on an operator.

### Solution to Problem

A coke dry-quenching device according to the present invention comprises: a cooling chamber for accepting red-hot coke, cooling the red-hot coke by using a cooling gas, and discharging the cooled coke; a boiler for recovering energy from heat that the red-hot coke generates; a first gas line that guides the cooling gas having passed through the coke in the cooling chamber to the boiler; a second gas line that guides the cooling gas having passed through the boiler to the cooling chamber; a bypass line that guides part of the cooling gas passing through the second gas line to the first gas line without passing through the cooling chamber; a diffusion line that guides part of the cooling gas passing through the second gas line to outside; a circulation flowmeter that detects a gas flow rate in the second gas line and a circulation flow rate adjuster that adjusts the gas flow rate, the circulation flowmeter and the circulation flow rate adjuster being located in positions upstream of the bypass line and the diffusion line; a bypass flowmeter that detects a gas flow rate in the bypass line and a bypass flow rate adjuster that adjusts the gas flow rate; a diffusion flowmeter that detects a gas flow rate in the diffusion line and a diffusion flow rate adjuster that adjusts the gas flow rate; and an inlet flow rate controller configured to subtract the flow rates detected by the bypass flowmeter and the diffusion flowmeter from the flow rate detected by the circulation flowmeter to calculate a chamber inlet flow rate and to control the circulation flow rate adjuster or the diffusion flow rate adjuster in such a way that a ratio between an amount of coke discharged from the cooling chamber and the chamber inlet flow rate approaches a target ratio. The inlet flow rate controller is configured to perform, when the ratio of the chamber inlet flow rate to the discharged coke amount is lower than the target ratio, at least one of controlling the circulation flow rate adjuster to increase the circulation flow rate and controlling the diffusion flow rate adjuster to decrease the diffusion flow rate, whereas when the ratio of the chamber inlet flow rate to the discharged coke amount is higher than the target ratio, at least one of controlling the circulation flow rate adjuster to decrease the circulation flow rate and controlling the diffusion flow rate adjuster to increase the diffusion flow rate.

In the coke dry-quenching device, the circulation flow rate adjuster or the diffusion flow rate adjuster is controlled in such a way that the ratio between the discharged coke amount and the chamber inlet flow rate approaches a target ratio. The amount of the cooling gas is thus automatically adjusted in accordance with an increase or decrease in the amount of coke to be cooled, whereby the discharged coke temperature is automatically adjusted. That is, since at least one of the parameters described above is automatically adjusted, the burden on the operator can be reduced. It is further expected that the discharged coke temperature is stabilized as compared with a case where the parameters are manually adjusted. When the discharged coke temperature is stabilized, the life of devices that discharge and transport cooled coke can be prolonged. For example, burnout, degradation, or other types of failure of a conveyer belt for transporting discharged coke can be avoided.

To control the chamber inlet flow rate, it is necessary to detect the chamber inlet flow rate, but a number of components are intensively disposed in the vicinity of the inlet of the cooling chamber, such as a branch portion where the bypass line and the diffusion line branch off the second gas line. A straight pipe length necessary to install a flowmeter cannot therefore be provided, and it is difficult to install a flowmeter in many cases. In particular, when the coke dry-quenching device is additionally installed in a redundant space in the vicinity of an existing coke oven, it is more difficult to install a flowmeter in the vicinity of the inlet of the cooling chamber. In contrast, the inlet flow rate controller subtracts the bypass flow rate and the diffusion flow rate from the circulation flow rate to calculate the chamber inlet flow rate instead of detection of the chamber inlet flow rate. This also contributes to achievement of the automatic adjustment of the discharged coke temperature.

The coke dry-quenching device further comprises: an assisting gas line that guides a combustion assisting gas containing oxygen to the first gas line; an assisting gas flow rate adjuster that adjusts a gas flow rate in the assisting gas line; a boiler-inlet gas thermometer that detects a gas temperature in the first gas line as a boiler-inlet gas temperature; and a gas temperature controller configured to control the bypass flow rate adjuster or the assisting gas flow rate adjuster in such a way that the boiler-inlet gas temperature approaches a target temperature. In this case, since the bypass flow rate adjuster or the assisting gas flow rate adjuster is controlled by the gas temperature controller in such a way that the boiler-inlet gas temperature approaches the target temperature, the boiler-inlet gas temperature is automatically adjusted. In addition to this, since the chamber inlet flow rate is automatically adjusted by the inlet flow rate controller, variation in the chamber inlet flow rate in association with variation in the bypass flow rate is suppressed. That is, since at least the chamber inlet flow rate and the boiler-inlet gas temperature, which are two of the parameters described above, are automatically adjusted, the burden on the operator can be further reduced. Moreover, it is also expected that the boiler-inlet gas temperature is stabilized as compared with a case where the parameters are manually adjusted. When the boiler-inlet gas temperature is stabilized, the life of the boiler can be prolonged. For example, breakage or degradation of a boiler tube can be avoided.

The gas temperature controller is configured to perform, when the boiler-inlet gas temperature is higher than the target temperature, at least one of controlling the bypass flow rate adjuster to increase the gas flow rate in the bypass line and controlling the assisting gas flow rate adjuster to decrease the gas flow rate in the assisting gas line, whereas when the boiler-inlet gas temperature is lower than the target temperature, at least one of controlling the bypass flow rate adjuster to decrease the gas flow rate in the bypass line and controlling the assisting gas flow rate adjuster to increase the gas flow rate in the assisting gas line. When the bypass flow rate is increased, the boiler-inlet gas temperature lowers. When the assisting gas flow rate is increased, the boiler-inlet gas temperature rises. Therefore, when the boiler-inlet gas temperature is higher than the target temperature, performing at least one of increasing the bypass flow rate and decreasing the assisting gas flow rate allows a decrease in the boiler-inlet gas temperature. When the boiler-inlet gas temperature is lower than the target temperature, performing at least one of decreasing the bypass flow rate and increasing the assisting gas flow rate allows an increase in the boiler-inlet gas temperature. The boiler-inlet gas temperature is therefore reliably allowed to approach the target temperature. It is therefore expected that the boiler-inlet gas temperature is further stabilized.

The coke dry-quenching device further comprises a CO concentration analyzer that detects CO concentration in the cooling gas, and the gas temperature controller is configured to control the bypass flow rate adjuster and the assisting gas flow rate adjuster in such a way that the gas flow rate in the assisting gas line is increased and the gas flow rate in the bypass line is increased in accordance with an increase in the CO concentration. In this case, the assisting gas flow rate is increased in accordance with an increase in the CO concentration, whereby the CO concentration is lowered. Since the bypass flow rate is also increased in accordance with an increase in the assisting gas flow rate, the effect of an increase in the assisting gas flow rate on the boiler-inlet gas temperature is canceled. As a result, the boiler-inlet gas temperature is continuously adjusted with no effect of the adjustment of the CO concentration thereon. Further, since the chamber inlet flow rate is automatically adjusted by the inlet flow rate controller, variation in the chamber inlet flow rate in association with variation in the bypass flow rate is suppressed. That is, since at least the chamber inlet flow rate, the boiler-inlet gas temperature, and the CO concentration, which are three of the parameters described above, are automatically adjusted, the burden on the operator can be further reduced. Moreover, it is also expected that the CO concentration, which corresponds to the amount of gas that has not combusted, is stabilized. The stabilization of the CO concentration allows more efficient recovery of sensible heat.

The coke dry-quenching device may further comprise a steam flowmeter that detects an amount of generated steam from the boiler, and when the generated steam amount is greater than a target amount, the gas temperature controller may control the assisting gas flow rate adjuster in such a way that the gas flow rate in the assisting gas line is lowered and place a standby period until the generated steam amount becomes smaller than the target amount. In this case, in addition to the adjustment of the chamber inlet flow rate and the boiler-inlet gas temperature, the generated steam amount is further adjusted. That is, since at least three of the parameters described above are automatically adjusted, the burden on the operator can be further reduced. When the generated steam amount is greater than the target amount, since the standby period is placed until the generated steam amount becomes smaller than the target amount, the generated steam amount is preferentially adjusted before the adjustment of the boiler-inlet gas temperature. As a result, breakage of a turbine and other components driven with the steam can be more reliably avoided. Further, since the assisting gas flow rate is lowered, heat generation in a stage upstream of the boiler is reliably suppressed, whereby the generated steam amount can be quickly decreased.

A coke dry-quenching method according to the present invention is a coke dry-quenching method executed by a controller of a device including a cooling chamber for accepting red-hot coke, cooling the red-hot coke by using a cooling gas, and discharging the cooled coke, a boiler for recovering energy from heat that the red-hot coke generates, a first gas line that guides the cooling gas having passed through the coke in the cooling chamber to the boiler, a second gas line that guides the cooling gas having passed through the boiler to the cooling chamber, a bypass line that guides part of the cooling gas passing through the second gas line to the first gas line without passing through the cooling chamber, and a diffusion line that guides part of the cooling gas passing through the second gas line to outside, the method comprising acquiring a gas flow rate in the second gas line and in a position upstream of the bypass line and the diffusion line as a circulation flow rate, acquiring a gas flow rate in the bypass line as a bypass flow rate, acquiring a gas flow rate in the diffusion line as a diffusion flow rate, and subtracting the bypass flow rate and the diffusion flow rate from the circulation flow rate to calculate a chamber inlet flow rate and adjusting the circulation flow rate or the diffusion flow rate in such a way that a ratio between an amount of coke discharged from the cooling chamber and the chamber inlet flow rate approaches a target ratio.

In the coke dry-quenching method, the circulation flow rate or the diffusion flow rate is adjusted in such a way that the ratio between the discharged coke amount and the chamber inlet flow rate approaches a target ratio. The amount of the cooling gas is thus automatically adjusted in accordance with an increase or decrease in the amount of coke to be cooled, whereby the discharged coke temperature is automatically adjusted. That is, since at least one of the parameters described above is automatically adjusted, the burden on the operator can be reduced. It is further expected that the discharged coke temperature is stabilized as compared with a case where the parameters are manually adjusted. When the discharged coke temperature is stabilized, the life of devices that discharge and transport cooled coke can be prolonged. For example, burnout, degradation, or other types of failure of a conveyer belt for transporting discharged coke can be avoided.

To adjust the chamber inlet flow rate, it is necessary to detect the chamber inlet flow rate, but a number of components are intensively disposed in the vicinity of the inlet of the cooling chamber, such as a branch portion where the bypass line and the diffusion line branch off the second gas line. A straight pipe length necessary to install a flowmeter cannot therefore be provided, and it is difficult to install a flowmeter in many cases. In particular, when the coke dry-quenching device is additionally installed in a redundant space in the vicinity of an existing coke oven, it is more difficult to install a flowmeter in the vicinity of the inlet of the cooling chamber. In contrast, the bypass flow rate and the diffusion flow rate are subtracted from the circulation flow rate for calculation of the chamber inlet flow rate instead of detection of the chamber inlet flow rate. This also contributes to achievement of the automatic adjustment of the discharged coke temperature.

The coke dry-quenching method further comprises: acquiring a gas temperature in the first gas line as a boiler-inlet gas temperature; using an assisting gas line that guides a combustion assisting gas containing oxygen to the first gas line; and adjusting gas flow rates in the bypass line and the assisting gas line in such a way that the boiler-inlet gas temperature approaches a target temperature. In this case, since the bypass flow rate or the assisting gas flow rate is adjusted in such a way that the boiler-inlet gas temperature approaches the target temperature, the boiler-inlet gas temperature is automatically adjusted. In addition to this, since the chamber inlet flow rate is automatically adjusted, variation in the chamber inlet flow rate in association with variation in the bypass flow rate is suppressed. That is, since at least the chamber inlet flow rate and the boiler-inlet gas temperature, which are two of the parameters described above, are automatically adjusted, the burden on the operator can be further reduced. Moreover, it is also expected that the boiler-inlet gas temperature is stabilized as compared with a case where the parameters are manually adjusted. When the boiler-inlet gas temperature is stabilized, the life of the boiler can be prolonged. For example, breakage or degradation of a boiler tube can be avoided.

When the boiler-inlet gas temperature is higher than the target temperature, at least one of increasing the gas flow rate in the bypass line and decreasing the gas flow rate in the assisting gas line may be performed, whereas when the boiler-inlet gas temperature is lower than the target temperature, at least one of decreasing the gas flow rate in the bypass line and increasing the gas flow rate in the assisting gas line may be performed. When the bypass flow rate is increased, the boiler-inlet gas temperature lowers. When the assisting gas flow rate is increased, the boiler-inlet gas temperature rises. Therefore, when the boiler-inlet gas temperature is higher than the target temperature, performing at least one of increasing the bypass flow rate and decreasing the assisting gas flow rate allows a decrease in the boiler-inlet gas temperature. When the boiler-inlet gas temperature is lower than the target temperature, performing at least one of decreasing the bypass flow rate and increasing the assisting gas flow rate allows an increase in the boiler-inlet gas temperature. The boiler-inlet gas temperature is therefore reliably allowed to approach the target temperature. It is therefore expected that the boiler-inlet gas temperature is further stabilized.

The coke dry-quenching method further comprises acquiring CO concentration in the cooling gas and increasing the gas flow rate in the assisting gas line and increasing the gas flow rate in the bypass line in accordance with an increase in the CO concentration. In this case, the assisting gas flow rate is increased in accordance with an increase in the CO concentration, whereby the CO concentration is lowered. Since the bypass flow rate is also increased in accordance with an increase in the assisting gas flow rate, the effect of an increase in the assisting gas flow rate on the boiler-inlet gas temperature is canceled. As a result, the boiler-inlet gas temperature is continuously adjusted with no effect of the adjustment of the CO concentration thereon. Further, since the chamber inlet flow rate is automatically adjusted, variation in the chamber inlet flow rate in association with variation in the bypass flow rate is suppressed. That is, since at least the chamber inlet flow rate, the boiler-inlet gas temperature, and the CO concentration, which are three of the parameters described above, are automatically adjusted, the burden on the operator can be further reduced. Moreover, it is also expected that the CO concentration, which corresponds to the amount of gas that has not combusted, is stabilized. The stabilization of the CO concentration allows more efficient recovery of sensible heat.

The coke dry-quenching method may further comprise acquiring an amount of generated steam from the boiler, when the generated steam amount is greater than a target amount, decreasing the gas flow rate in the assisting gas line and placing a standby period until the generated steam amount becomes smaller than the target amount, and after the generated steam amount becomes smaller than the target amount, adjusting the gas flow rates in the bypass line and the assisting gas line to allow the boiler-inlet gas temperature to approach the target temperature. In this case, in addition to the adjustment of the chamber inlet flow rate and the boiler-inlet gas temperature, the generated steam amount is further adjusted. That is, since at least three of the parameters described above are automatically adjusted, the burden on the operator can be further reduced. When the generated steam amount is greater than the target amount, since the standby period is placed until the generated steam amount becomes smaller than the target amount, the generated steam amount is preferentially adjusted before the adjustment of the boiler-inlet gas temperature. As a result, breakage of a turbine and other components driven with the steam can be more reliably avoided. Further, when the generated steam amount is greater than the target amount, the assisting gas flow rate is lowered, whereby heat generation in a stage upstream of the boiler is reliably suppressed, and the generated steam amount can be quickly decreased.

### Advantageous Effects of Invention

According to the present invention, the burden on the operator can be reduced.

### Brief Description of Drawings

[Figure 1] Figure 1 is a diagrammatic view showing a schematic configuration of a coke dry-quenching device.
[Figure 2] Figure 2 is a flowchart showing the procedure of control performed by a gas temperature controller.

### Description of Embodiments

A preferable embodiment of the present invention will be described below in detail with reference to the drawings. In the description, the same elements and elements having the same functions have the same reference characters, and no redundant description will be made.

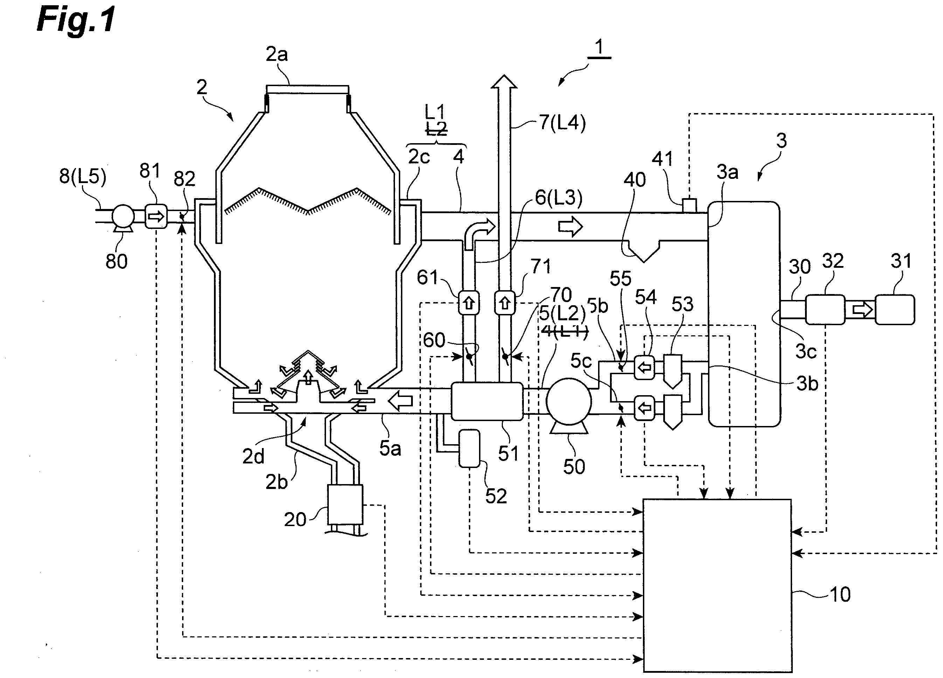

A coke dry-quenching device 1 includes a cooling chamber 2, a boiler 3, pipes 4 and 5, a bypass pipe 6, a gas diffusion pipe 7, an assisting gas supply pipe 8, and a controller 10, as shown in Figure 1. The coke dry-quenching device 1 is a device that cools red-hot coke discharged from a coke oven.

The cooling chamber 2 has a coke accepting section 2a, a coke discharging section 2b, a sloping flue section 2c, and a gas blow-in section 2d. The coke accepting section 2a is provided in an upper portion of the cooling chamber 2 and accepts red-hot coke. The coke discharging section 2b is provided in a lower portion of the cooling chamber 2 and discharges the coke in the cooling chamber 2. The coke discharging section 2b is provided with a coke discharge mechanism 20. The coke discharge mechanism 20 is formed, for example, of a vibrating feeder and a rotary sealing valve and discharges a desired amount of coke per unit time. The gas blow-in section 2d is provided in a lower portion of the cooling chamber 2, introduces a cooling gas into the cooling chamber 2, and blows the cooling gas to the coke. The cooling gas is an inert gas primarily made, for example, of nitrogen gas. The sloping flue section 2c is provided around the outer circumference of an upper portion of the cooling chamber 2 and temporarily accepts the cooling gas having passed through the coke in the cooling chamber 2.

The boiler 3 has a gas accepting section 3a, a gas exhausting section 3b, and a steam releasing section 3c. In the boiler 3, the gas is accepted through the gas accepting section 3a and exhausted through the gas exhausting section 3b, and steam is generated by sensible heat of the gas passing through the portion between the gas accepting section 3a and the gas exhausting section 3b, followed by release of the steam through the steam releasing section 3c. A turbine generator 31 is connected to the steam releasing section 3c via a steam release pipe 30. The turbine generator 31 uses the steam released through the steam releasing section 3c to generate electricity. The steam release pipe 30 is provided with a main steam flowmeter 32. The main steam flowmeter 32 detects the amount of steam (generated steam amount) passing through the steam release pipe 30.

The pipe 4 connects the sloping flue section 2c of the cooling chamber 2 to the gas accepting section 3a of the boiler 3. The pipe 4 guides the gas in the sloping flue section 2c to the boiler 3. That is, the pipe 4 and the sloping flue section 2c together form a first gas line L1. A portion of the pipe 4 in the vicinity of the gas accepting section 3a is provided with a primary dust catcher 40 and a boiler-inlet gas thermometer 41 sequentially arranged from the upstream side. The primary dust catcher 40 is, for example, a cyclone and separates dust from the gas passing through the pipe 4. The boiler-inlet gas thermometer 41 detects the temperature of the gas in the pipe 4 as a boiler-inlet gas temperature (temperature of the gas immediately before it flows into the boiler 3).

The pipe 5 connects the gas exhausting section 3b of the boiler 3 to the gas blow-in section 2d of the cooling chamber 2. The pipe 5 guides the gas having passed through the boiler 3 as the cooling gas to the cooling chamber 2. That is, the pipe 5 forms a second gas line L2. A blower 50 is provided in an intermediate position on the pipe 50. The blower 50 pumps the gas from the boiler 3 toward the cooling chamber 2. A downstream section 5a of the pipe 5, which is located downstream of the blower 50, is provided with an economizer 51. The economizer 51 is a heat exchanger and preheats water by using sensible heat of the gas passing through the pipe 5. The water preheated by the economizer 51 is introduced as water for generating steam into the boiler 3.

A gas analyzer (CO concentration analyzer) 52 is connected to the downstream section 5a. The portion where the gas analyzer 52 is connected to the downstream section 5a is located downstream of the economizer 51. The gas analyzer 52 analyzes the components of the gas passing through the pipe 5. A portion of the pipe 5 that is located upstream of the blower 50 is formed of two upstream sections 5b and 5c parallel to each other. Each of the upstream sections 5b and 5c is provided with a secondary dust catcher 53, a circulation flowmeter 54, and a circulation flow rate adjustment valve (circulation flow rate adjuster) 55 sequentially arranged from the upstream side. The secondary dust catchers 53 are each formed, for example, of a cyclone and separate dust from the gas passing through the upstream sections 5b and 5c. The circulation flowmeters 54 detect the gas flow rates (circulation flow rate) in the upstream sections 5b and 5c. The circulation flow rate adjustment valves 55 adjust the circulation flow rate. The upstream sections 5b and 5c, which are routed around the secondary dust catchers 53, are longer than the downstream section 5a. The circulation flowmeters 54 and the circulation flow rate adjustment valves 55 are therefore readily arranged in the upstream sections 5b and 5c.

The bypass pipe 6 connects the economizer 51 to an upstream portion of the pipe 4 and guides part of the gas traveling from the blower 50 toward the cooling chamber 2 to the pipe 4 without passing through the cooling chamber 2. That is, the bypass pipe 6 forms a bypass line L3, which guides part of the gas passing through the second gas line L2 to the first gas line L1. The bypass pipe 6 is provided with a bypass flow rate adjustment valve 60 and a bypass flowmeter 61 sequentially arranged from the upstream side. The bypass flow rate adjustment valve (bypass flow rate adjuster) 60 adjusts the gas flow rate in the bypass pipe 6 (bypass flow rate). The bypass flowmeter 61 detects the bypass flow rate.

The gas diffusion pipe 7 is connected to the economizer 51 and guides part of the gas traveling from the blower 50 toward the cooling chamber 2 to the outside. That is, the gas diffusion pipe 7 forms a diffusion line L4, which guides part of the gas passing through the second gas line L2 to the outside. The gas diffusion pipe 7 is provided with a diffusion flow rate adjustment valve 70 and a diffusion flowmeter 71 sequentially arranged from the upstream side. The diffusion flow rate adjustment valve (diffusion flow rate adjuster) 70 adjusts the gas flow rate in the gas diffusion pipe 7 (diffusion flow rate). The diffusion flowmeter 71 detects the diffusion flow rate.

The assisting gas supply pipe 8 is connected to the sloping flue section 2c and introduces a combustion assisting gas containing oxygen into the sloping flue section 2c. That is, the assisting gas supply pipe 8 forms an assisting gas line L5, which guides the combustion assisting gas to the first gas line L1. The combustion assisting gas is, for example, air. The assisting gas supply pipe 8 is provided with a blower 80, an assisting gas flowmeter 81, and an assisting gas flow rate adjustment valve 82 sequentially arranged from the upstream side. The blower 80 pumps the combustion assisting gas toward the sloping flue section 2c. The assisting gas flowmeter 81 detects the gas flow rate in the assisting gas supply pipe 8 (assisting gas flow rate). The assisting gas flow rate adjustment valve 82 adjusts the assisting gas flow rate.

The controller 10 acquires information from the coke discharge mechanism 20, the main steam flowmeter 32, the boiler-inlet gas thermometer 41, the gas analyzer 52, the circulation flowmeters 54, the bypass flowmeter 61, the diffusion flowmeter 71, and the assisting gas flowmeter 81 and controls the circulation flow rate adjustment valves 55, the bypass flow rate adjustment valve 60, the diffusion flow rate adjustment valve 70, and the assisting gas flow rate adjustment valve 82 to execute a coke dry-quenching method that will be described later.

In the coke dry-quenching device 1, the cooling gas passes through the pipes 4 and 5 and circulates through the portion between the cooling chamber 2 and the boiler 3. In the cooling chamber 2, the red-hot coke is cooled when the cooling gas passes. The cooled coke is discharged by the coke discharge mechanism 20 through the coke discharging section 2b. In the boiler 3, sensible heat of the gas having passed through the red-hot coke generates steam, and the steam is released through the steam releasing section 3c. The turbine generator 31 is driven by the released steam for power generation. The energy released from the red-hot coke is thus recovered in the form of electric power. The gas cooled after the steam is generated is blown as the cooling gas into the cooling chamber 2 again. The cooling of the red-hot coke and the recovery of thermal energy are thus continuously performed. The recovery of the thermal energy contributes to reduction in CO₂.

The coke dry-quenching method executed by the controller 10 will subsequently be described in detail. In the operation of the coke dry-quenching device 1, it is necessary to reliably cool red-hot coke and generate an appropriate amount of steam from the boiler 3. It is further desirable to suppress an increase in CO concentration in the circulating gas. To satisfy the requirements, it is necessary to appropriately adjust the discharged coke temperature, the boiler-inlet gas temperature, the generated steam amount, the CO concentration, and other parameters. The controller 10 performs control for automatic adjustment of the parameters.

The controller 10 first acquires circulation flow rates from the two circulation flowmeters 54 provided in the upstream sections 5b and 5c, acquires the bypass flow rate from the bypass flowmeter 61, acquires the diffusion flow rate from the diffusion flowmeter 71, and acquires the discharged coke amount from the coke discharge and the diffusion flow rate from the circulation flow rate to calculate a chamber inlet flow rate and controls the circulation flow rate adjustment valves 55 or the diffusion flow rate adjustment valve 70 in such a way that the ratio between the discharged coke amount and the chamber inlet flow rate approaches a target ratio. That is, the controller 10 forms an inlet flow rate controller.

In response to a decrease in the ratio of the chamber inlet flow rate to the discharged coke amount so as to be lower than the target ratio, at least one of increasing the openings of the circulation flow rate adjustment valves 55 and decreasing the opening of the diffusion flow rate adjustment valve 70 is performed. On the other hand, in response to an increase in the ratio of the chamber inlet flow rate to the discharged coke amount so as to be greater than the target ratio, at least one of decreasing the openings of the circulation flow rate adjustment valves 55 and increasing the opening of the diffusion flow rate adjustment valve 70. The target ratio is set as appropriate in accordance with the temperature of the red-hot coke, a target discharged coke temperature, and other factors.

When the ratio between the discharged coke amount and the chamber inlet flow rate approaches the target ratio, the amount of the cooling gas is automatically adjusted in accordance with an increase or decrease in the amount of coke to be cooled, whereby the discharged coke temperature is automatically adjusted. That is, since at least one of the parameters described above is automatically adjusted, the burden on the operator can be reduced. It is further expected that the discharged coke temperature is stabilized as compared with a case where the parameters are manually adjusted. When the discharged coke temperature is stabilized, the life of the coke discharge mechanism 20 and other devices that discharge and transport cooled coke can be prolonged. For example, burnout, degradation, or other types of failure of a conveyer belt for transporting discharged coke can be avoided.

To control the chamber inlet flow rate, it is necessary to detect the chamber inlet flow rate, but a number of components are intensively disposed in the vicinity of the inlet of the cooling chamber 2, such as a branch portion where the bypass pipe 6 and the gas diffusion pipe 7 branch off the pipe 5, the gas analyzer 52, and the economizer 51. A straight pipe length necessary to install a flowmeter cannot therefore be provided, and it is difficult to install a flowmeter. In particular, when the coke dry-quenching device 1 is additionally installed in a redundant space in the vicinity of an existing coke oven, it is more difficult to install a flowmeter in the vicinity of the inlet of the cooling chamber 2. In contrast, in the present method, the bypass flow rate and the diffusion flow rate are subtracted from the circulation flow rate to calculate the chamber inlet flow rate instead of detection of the chamber inlet flow rate. This also contributes to achievement of the automatic adjustment of the discharged coke temperature.

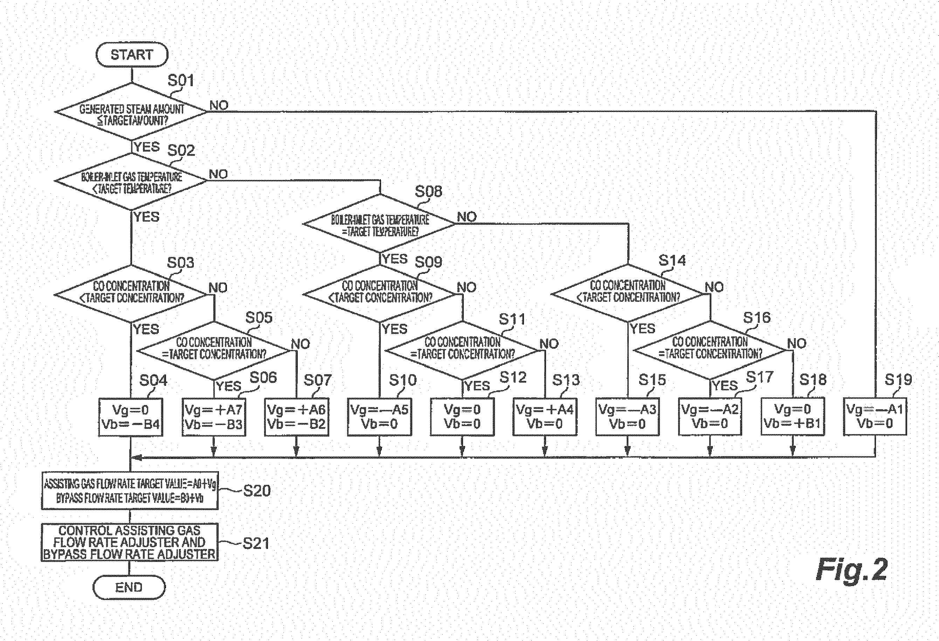

In addition to the control performed by the controller 10 as the inlet flow rate controller, the controller 10 controls the bypass flow rate adjustment valve 60 or the assisting gas flow rate adjustment valve 82 in such a way that the boiler-inlet gas temperature approaches a target temperature. That is, the controller 10 also forms a gas temperature controller. The procedure of the control performed by the controller 10 as the gas temperature controller will be described with reference to Figure 2. In Figure 2, reference character A0 denotes an initial value of an assisting gas flow rate target value. Reference character B0 denotes an initial value of a bypass flow rate target value. Reference character Vg denotes a correction value that corrects the assisting gas flow rate. Reference character Vb denotes a correction value that corrects the bypass flow rate.

The controller 10 as the gas temperature controller acquires the generated steam amount from the main steam flowmeter 32, acquires the assisting gas flow rate from the assisting gas flowmeter 81, and acquires the CO concentration from the gas analyzer 52. The controller 10 then calculates the correction values Vg and Vb, which correct the assisting gas flow rate and the bypass flow rate, on the basis of the generated steam amount, the boiler-inlet gas temperature, and the CO concentration. Specifically, whether the generated steam amount is smaller than or equal to a target amount is first checked (S01). The target amount is set as appropriate in accordance with the specifications of the turbine generator 31 and other factors. When the generated steam amount is smaller than or equal to the target amount, whether the boiler-inlet gas temperature is lower than a target temperature is then checked (S02). The target temperature is set as appropriate from a viewpoint of boiler facility protection and other factors. When the boiler-inlet gas temperature is lower than the target temperature, whether the CO concentration is lower than a target concentration is then checked (S03). The target concentration is set as appropriate from a viewpoint of optimization of combustion assistance and other factors. When the CO concentration is lower than the target concentration, the correction value Vg is set at 0, and the correction value Vb is set at -B4 (S04). Reference character B4 is a value ranging, for example, from 15 to 20% of the initial value B0.

In S03 described above, when the CO concentration is higher than or equal to the target concentration, whether the CO concentration is equal to the target concentration is checked (S05). The equality means, for example, that the CO concentration is within ±20% of the target concentration. When the CO concentration is equal to the target concentration, the correction value Vg is set at +A7, and the correction value Vb is set at -B3 (S06). Reference character A7 is a value ranging, for example, from 2 to 3% of the initial value A0. Reference character B3 is a value ranging, for example, from 10 to 15% of the initial value B0, which is smaller than B4.

In S05 described above, when the CO concentration is higher than the target concentration, the correction value Vg is set at +A6, and the correction value Vb is set at -B2 (S07). Reference character A6 is a value ranging, for example, from 3 to 4% of the initial value A0, which is greater than A7. Reference character B2 is a value ranging, for example, from 5 to 10% of the initial value B0, which is smaller than B3.

In S02 described above, when the boiler-inlet gas temperature is higher than or equal to the target temperature, whether the boiler-inlet gas temperature is equal to the target temperature is then checked (S08). The equality means, for example, that the boiler-inlet gas temperature is within ±5% of the target temperature. When the boiler-inlet gas temperature is equal to the target temperature, whether the CO concentration is lower than the target concentration is then checked (S09). When the CO concentration is lower than the target concentration, the correction value Vg is set at -A5, and the correction value Vb is set at 0 (S10). Reference character A5 is a value ranging, for example, from 2 to 3% of the initial value A0.

In S09 described above, when the CO concentration is higher than or equal to the target concentration, whether the CO concentration is equal to the target concentration is checked (S11). When the CO concentration is equal to the target concentration, the correction value Vg is set at 0, and the correction value Vb is set at 0 (S12).

In S11 described above, when the CO concentration is higher than the target concentration, the correction value Vg is set at +A4, and the correction value Vb is set at 0 (S13). Reference character A4 is a value ranging, for example, from 2 to 3% of the initial value A0.

In S08 described above, when the boiler-inlet gas temperature is higher than the target temperature, whether the CO concentration is lower than the target concentration is then checked (S14). When the CO concentration is lower than the target concentration, the correction value Vg is set at -A3, and the correction value Vb is set at 0 (S15). Reference character A3 is a value ranging, for example, from 3 to 4% of the initial value A0.

In S14 described above, when the CO concentration is higher than or equal to the target concentration, whether the CO concentration is equal to the target concentration is checked (S16). When the CO concentration is equal to the target concentration, the correction value Vg is set at -A2, and the correction value Vb is set at 0 (S17). Reference character A2 is a value ranging, for example, from 2 to 3% of the initial value A0, which is smaller than A3.

In S16 described above, when the CO concentration is higher than the target concentration, the correction value Vg is set at 0, and the correction value Vb is set at +B1 (S18). Reference character B1 is a value ranging, for example, from 15 to 20% of the initial value B0.

In S01 described above, when the generated steam amount is greater than the target amount, the correction value Vg is set at -A1 (S19). Reference character A1 is a value ranging, for example, from 3 to 4% of the initial value A0.

After the correction values Vg and Vb are set, the controller 10 adds the correction value Vg to the initial value A0 to calculate the target value of the assisting gas flow rate. The controller adds the correction value Vb to the initial value B0 to calculate the target value of the bypass flow rate (S20). The controller then controls the assisting gas flow rate adjustment valve 82 and the bypass flow rate adjustment valve 60 in such a way that the assisting gas flow rate and the bypass flow rate approach the target values (S21). That is, the opening of the assisting gas flow rate adjustment valve 82 is increased in response to a decrease in the assisting gas flow rate so as to be lower than the target value, and the opening of the bypass flow rate adjustment valve 60 is increased in response to a decrease in the bypass flow rate so as to be lower than the target value. On the other hand, the opening of the assisting gas flow rate adjustment valve 82 is decreased in response to an increase in the assisting gas flow rate so as to be greater than the target value, and the opening of the bypass flow rate adjustment valve 60 is decreased in response to an increase in the bypass flow rate so as to be greater than the target value.

The controller 10 as the gas temperature controller repeats the procedure described above. The repetition cycle is, for example, 60 seconds. The repetition allows at least one of decreasing the bypass flow rate and increasing the assisting gas flow rate to be performed when the boiler-inlet gas temperature is lower than the target temperature, whereas allowing at least one of increasing the bypass flow rate and decreasing the assisting gas flow rate to be performed when the boiler-inlet gas temperature is higher than the target temperature.

When the bypass flow rate is increased, the boiler-inlet gas temperature lowers. When the assisting gas flow rate is increased, the boiler-inlet gas temperature rises. Therefore, when the boiler-inlet gas temperature is lower than the target temperature, performing at least one of decreasing the bypass flow rate and increasing the assisting gas flow rate allows an increase in the boiler-inlet gas temperature. On the other hand, when the boiler-inlet gas temperature is higher than the target temperature, performing at least one of increasing the bypass flow rate and decreasing the assisting gas flow rate allows a decrease in the boiler-inlet gas temperature. The boiler-inlet gas temperature is therefore so automatically adjusted as to approach the target temperature. In addition to this, since the chamber inlet flow rate is automatically adjusted by the control performed by the controller 10 as the inlet flow rate controller, variation in the chamber inlet flow rate in association with variation in the bypass flow rate is suppressed. That is, since at least the chamber inlet flow rate and the boiler-inlet gas temperature, which are two of the parameters described above, are automatically adjusted, the burden on the operator can be further reduced. Moreover, it is also expected that the boiler-inlet gas temperature is stabilized as compared with a case where the parameters are manually adjusted. When the boiler-inlet gas temperature is stabilized, the life of the boiler can be prolonged. For example, breakage or degradation of a boiler tube can be avoided.

In accordance with an increase in the CO concentration in the cooling gas, the assisting gas flow rate and the bypass flow rate are also increased. Since the assisting gas flow rate is increased in accordance with an increase in the CO concentration, the CO concentration is lowered. Since the bypass flow rate is also increased in accordance with an increase in the assisting gas flow rate, the effect of an increase in the assisting gas flow rate on the boiler-inlet gas temperature is canceled. As a result, the boiler-inlet gas temperature is continuously adjusted with no effect of the adjustment of the CO concentration thereon. Further, since the chamber inlet flow rate is automatically adjusted by the control performed by the controller 10 as the inlet flow rate controller, variation in the chamber inlet flow rate in association with variation in the bypass flow rate is suppressed. That is, since at least the chamber inlet flow rate, the boiler-inlet gas temperature, and the CO concentration, which are three of the parameters described above, are automatically adjusted, the burden on the operator can be further reduced. Moreover, it is also expected that the CO concentration, which corresponds to the amount of gas that has not combusted, is stabilized. The stabilization of the CO concentration allows more efficient recovery of sensible heat.

When the generated steam amount is greater than a target amount, the assisting gas flow rate adjuster is so controlled that the gas flow rate in the assisting gas line is lowered, and a standby period is placed until the generated steam amount becomes smaller than the target amount (S19). As a result, in addition to the adjustment of the chamber inlet flow rate, the boiler-inlet gas temperature, and the CO concentration, the generated steam amount is further adjusted. That is, since at least four of the parameters described above are automatically adjusted, the burden on the operator can be further reduced. When the generated steam amount is greater than the target amount, since the standby period is placed until the generated steam amount becomes smaller than the target amount, the generated steam amount is preferentially adjusted before the adjustment of the boiler-inlet gas temperature. As a result, breakage of the turbine generator 31 and other components driven with the steam can be more reliably avoided. Further, since the assisting gas flow rate is lowered, heat generation in a stage upstream of the boiler 3 is reliably suppressed, whereby the generated steam amount can be quickly decreased.

As described above, according to the coke dry-quenching device 1, the burden on the operator can be reduced. The present inventors have estimated the burden on the operator in a case where the controller 10 performs the control described above and in a case where the control described above is not performed. To operate the coke dry-quenching device 1 under the following conditions: The discharged coke temperature is lower than or equal to 180°C; the boiler-inlet gas temperature ranges from 850 to 970°C; and the CO concentration ranges from 1 to 3%, it is estimated that two operators need to perform the monitoring and manual adjustment when the control described above is not performed. In contrast, it is estimated that performing only part of the control described above, that is, the control of adjusting the circulation flow rate or the diffusion flow rate in such a way that the ratio between the discharged coke amount and the chamber inlet flow rate approaches a target ratio (hereinafter referred to as "first control") allows about 25% reduction in the period required for the monitoring and manual adjustment. It is further estimated that performing control of further adjusting the gas flow rates in the bypass line and the assisting gas line in such a way that the boiler-inlet gas temperature approaches a target temperature (hereinafter referred to as "second control") along with the first control allows further reduction of about 25% in the period required for the monitoring and manual adjustment. It is further estimated that performing control of increasing the gas flow rate in the assisting gas line and increasing the gas flow rate in the bypass line in accordance with an increase in the CO concentration (hereinafter referred to as "third control") along with the first control allows further reduction of about 10% in the period required for the monitoring and manual adjustment. It is further estimated that when the generated steam amount is greater than a target amount, performing control of lowering the gas flow rate in the assisting gas line and placing a standby period until the generated steam amount becomes smaller than the target amount (hereinafter referred to as "fourth control") along with the first control allows further reduction of about 10% in the period required for the monitoring and manual adjustment. It is further estimated that performing all the first control, the second control, the third control, and the fourth control allows about 75% reduction in the burden on the operator. As described above, according to the coke dry-quenching device 1, it is expected that the burden on the operator can be greatly reduced.

### Industrial Applicability

The present invention is applicable to a coke dry-quenching device.

### Reference Signs List

1: Coke dry-quenching device, 2: Cooling chamber, 3: Boiler, 32: Main steam flowmeter, 10: Controller (inlet flow rate controller, gas temperature controller), 41: Boiler-inlet gas thermometer, 52: Gas analyzer (CO concentration analyzer), 54: Circulation flowmeter, 55: Circulation flow rate adjustment valve (Circulation flow rate adjuster), 60: Bypass flow rate adjustment valve (Bypass flow rate adjuster), 61: Bypass flowmeter, 70: Diffusion flow rate adjustment valve (Diffusion flow rate adjuster), 71: Diffusion flowmeter, 81: Assisting gas flowmeter, 82: Assisting gas flow rate adjustment valve (Assisting gas flow rate adjuster), L1: First gas line, L2: Second gas line, L3: Bypass line, L4: Diffusion line, L5: Assisting gas line

## Claims

1. A coke dry-quenching device (1) comprising:
a cooling chamber (2) for accepting red-hot coke, cooling the red-hot coke by using a cooling gas, and discharging the cooled coke;
a boiler (3) for recovering energy from heat that the red-hot coke generates;
a first gas line (L1) that guides the cooling gas having passed through the coke in the cooling chamber (2) to the boiler (3);
a second gas line (L2) that guides the cooling gas having passed through the boiler (3) to the cooling chamber (2);
a bypass line (L3) that guides part of the cooling gas passing through the second gas line (L2) to the first gas line (L1) without passing through the cooling chamber (2);
a diffusion line (L4) that guides part of the cooling gas passing through the second gas line (L2) to outside;
a circulation flowmeter (54) that detects a gas flow rate in the second gas line (L2) and a circulation flow rate adjuster (55) that adjusts this gas flow rate, the circulation flowmeter (54) and the circulation flow rate adjuster (55) being located in positions upstream of the bypass line (L3) and the diffusion line (L4);
a bypass flowmeter (61) that detects a gas flow rate in the bypass line (L3) and a bypass flow rate adjuster (60) that adjusts this gas flow rate;
a diffusion flowmeter (71) that detects a gas flow rate in the diffusion line (L4) and a diffusion flow rate adjuster (70) that adjusts this gas flow rate;
an inlet flow rate controller (10) configured to subtract the flow rates detected by the bypass flowmeter (61) and the diffusion flowmeter (71) from the flow rate detected by the circulation flowmeter (54) to calculate a chamber inlet flow rate and to control at least one of the circulation flow rate adjuster (55) and the diffusion flow rate adjuster (70) in such a way that a ratio between an amount of coke discharged from the cooling chamber (2) and the chamber inlet flow rate approaches a target ratio;
an assisting gas line (L5) that guides a combustion assisting gas containing oxygen to the first gas line (L1);
an assisting gas flow rate adjuster (82) that adjusts a gas flow rate in the assisting gas line;
a boiler-inlet gas thermometer (41) that detects a gas temperature in the first gas line (L1) as a boiler-inlet gas temperature;
a gas temperature controller (10) configured to control at least one of the bypass flow rate adjuster (60) and the assisting gas flow rate adjuster (82) in such a way that the boiler-inlet gas temperature approaches a target temperature;
a CO concentration analyzer (52) that detects CO concentration in the cooling gas,
wherein the gas temperature controller (10) is configured to control the bypass flow rate adjuster (60) and the assisting gas flow rate adjuster (82) in such a way that the gas flow rate in the assisting gas line (L5) is increased and the gas flow rate in the bypass line (L3) is increased in accordance with an increase in the CO concentration;
wherein the gas temperature controller (10) is configured to perform,
when the boiler-inlet gas temperature is higher than the target temperature, at least one of controlling the bypass flow rate adjuster (60) to increase the gas flow rate in the bypass line (L3) and controlling the assisting gas flow rate adjuster (82) to decrease the gas flow rate in the assisting gas line (L5),
whereas when the boiler-inlet gas temperature is lower than the target temperature, at least one of controlling the bypass flow rate adjuster (60) to decrease the gas flow rate in the bypass line (L3) and controlling the assisting gas flow rate adjuster (82) to increase the gas flow rate in the assisting gas line (L5); and
wherein the inlet flow rate controller (10) is configured to perform,
when the ratio of the chamber inlet flow rate to the discharged coke amount is lower than the target ratio, at least one of controlling the circulation flow rate adjuster (55) to increase the circulation flow rate and controlling the diffusion flow rate adjuster (70) to decrease the diffusion flow rate,
whereas when the ratio of the chamber inlet flow rate to the discharged coke amount is higher than the target ratio, at least one of controlling the circulation flow rate adjuster (55) to decrease the circulation flow rate and controlling the diffusion flow rate adjuster (70) to increase the diffusion flow rate.

2. The coke dry-quenching device according to any one of claim 1, further comprising:
a steam flowmeter (32) that detects an amount of generated steam from the boiler (3),
wherein when the generated steam amount is greater than a target amount, the gas temperature controller (10) is configured to control the assisting gas flow rate adjuster (82) in such a way that the gas flow rate in the assisting gas line (L5) is lowered and places a standby period until the generated steam amount becomes smaller than the target amount.

3. A coke dry-quenching method executed by a controller of a device (1) including:
a cooling chamber (2) for accepting red-hot coke, cooling the red-hot coke by using a cooling gas, and discharging the cooled coke;
a boiler (3) for recovering energy from heat that the red-hot coke generates,
a first gas line (L1) that guides the cooling gas having passed through the coke in the cooling chamber (2) to the boiler (3);
a second gas line (L2) that guides the cooling gas having passed through the boiler (3) to the cooling chamber (2);
a bypass line (L3) that guides part of the cooling gas passing through the second gas line (L2) to the first gas line (L1) without passing through the cooling chamber (2); and
a diffusion line (L4) that guides part of the cooling gas passing through the second gas line (L2) to outside,
the method comprising:
acquiring a gas flow rate in the second gas line (L2) and in a position upstream of the bypass line (L3) and the diffusion line (L4) as a circulation flow rate;
acquiring a gas flow rate in the bypass line (L3) as a bypass flow rate;
acquiring a gas flow rate in the diffusion line (L4) as a diffusion flow rate;
subtracting the bypass flow rate and the diffusion flow rate from the circulation flow rate to calculate a chamber inlet flow rate and adjusting the circulation flow rate or the diffusion flow rate in such a way that a ratio between an amount of coke discharged from the cooling chamber (2) and the chamber inlet flow rate approaches a target ratio;
acquiring a gas temperature in the first gas line (L1) as a boiler-inlet gas temperature;
using an assisting gas line (L5) that guides a combustion assisting gas containing oxygen to the first gas line (L1); and
adjusting gas flow rates in the bypass line (L3) and the assisting gas line (L5) in such a way that the boiler-inlet gas temperature approaches a target temperature;
acquiring CO concentration in the cooling gas; and
increasing the gas flow rate in the assisting gas line (L5) and increasing the gas flow rate in the bypass line (L3) in accordance with an increase in the CO concentration;
wherein when the boiler-inlet gas temperature is higher than the target temperature, at least one of increasing the gas flow rate in the bypass line (L3) and decreasing the gas flow rate in the assisting gas line (L5) is performed,
whereas when the boiler-inlet gas temperature is lower than the target temperature, at least one of decreasing the gas flow rate in the bypass line (L3) and increasing the gas flow rate in the assisting gas line (L5) is performed,
wherein when the ratio of the chamber inlet flow rate to the discharged coke amount is lower than the target ratio, at least one of increasing the circulation flow rate and decreasing the diffusion flow rate is performed,
whereas when the ratio of the chamber inlet flow rate to the discharged coke amount is higher than the target ratio, at least one of decreasing the circulation flow rate and increasing the diffusion flow rate is performed.

4. The coke dry-quenching method according to claim 3, further comprising:
acquiring an amount of generated steam from the boiler (3);
when the generated steam amount is greater than a target amount, decreasing the gas flow rate in the assisting gas line (L5) and placing a standby period until the generated steam amount becomes smaller than the target amount; and
after the generated steam amount becomes smaller than the target amount, adjusting the gas flow rates in the bypass line (L3) and the assisting gas line (L5) to allow the boiler-inlet gas temperature to approach the target temperature.

## Patentansprüche

1. Koks-Trockenlöschvorrichtung (1), die umfasst:
eine Kühlkammer (2) zum Aufnehmen eines rotglühenden Koks, zum Kühlen des rotglühenden Koks unter Verwendung eines Kühlgases und zum Ausführen des gekühlten Koks,
einen Kessel (3) zum Wiedergewinnen von Energie aus der Wärme, die der rotglühende Koks erzeugt,
eine erste Gasleitung (L1), die das Kühlgas nach dem Hindurchgehen durch den Koks in der Kühlkammer (2) zu dem Kessel (3) führt,
eine zweite Gasleitung (L2), die das Kühlgas nach dem Hindurchgehen durch den Kessel (3) zu der Kühlkammer (2) führt,
eine Bypassleitung (L3), die einen Teil des durch die zweite Gasleitung (L2) gehenden Gases zu der ersten Gasleitung (L1) führt, sodass er nicht durch die Kühlkammer (2) geht,
eine Diffusionsleitung (L4), die einen Teil des durch die zweite Gasleitung (L2) gehenden Kühlgases nach außen führt,
einen Zirkulationsflussmesser (54), der die Gasflussrate in der zweiten Gasleitung (L2) erfasst, und einen Zirkulationsflussraten-Einsteller (55), der diese Gasflussrate einstellt, wobei der Zirkulationsflussmesser (54) und der Zirkulationsflussraten-Einsteller (55) an Positionen stromaufwärts von der Bypassleitung (L3) und der Diffusionsleitung (L4) angeordnet sind,
einen Bypassflussmesser (61), der die Gasflussrate in der Bypassleitung (L3) erfasst, und einen Bypassflussraten-Einsteller (60), der diese Gasflussrate einstellt,
einen Diffusionsflussmesser (71), der die Gasflussrate in der Diffusionsleitung (L4) erfasst, und einen Diffusionsflussraten-Einsteller (70), der diese Gasflussrate einstellt,
eine Einlassflussraten-Steuereinrichtung (10), die konfiguriert ist zum Subtrahieren der durch den Bypassflussmesser (61) und den Diffusionsflussmesser (71) erfassten Flussraten von der durch den Zirkulationsflussmesser (54) erfassten Flussrate, um eine Kammereinlassflussrate zu berechnen und den Zirkulationsflussraten-Einsteller (55) und/oder den Diffusionsflussraten-Einsteller (70) derart zu steuern, dass sich das Verhältnis zwischen der von der Kühlkammer (2) ausgeführten Koksmenge und der Kammereinlassflussrate einem Zielverhältnis nähert,
eine Hilfsgasleitung (L5), die ein Sauerstoff enthaltendes Verbrennungshilfsgas zu der ersten Gasleitung (L1) führt,
einen Hilfsgasflussraten-Einsteller (82), der eine Gasflussrate in der Hilfsgasleitung einstellt,
ein Kesseleinlassgas-Thermometer (41), das die Gastemperatur in der ersten Gasleitung (L1) als eine Kesseleinlassgastemperatur erfasst,
eine Gastemperatur-Steuereinrichtung (10), die konfiguriert ist zum Steuern des Bypassflussraten-Einstellers (60) und/oder des Hilfsgasflussraten-Einstellers (82) derart, dass sich die Kesseleinlassgastemperatur einer Zieltemperatur nähert, und
einen CO-Konzentrationsanalysierer (52), der die CO-Konzentration in dem Kühlgas erfasst,
wobei die Gastemperatur-Steuereinrichtung (10) konfiguriert ist zum Steuern des Bypassflussraten-Einstellers (60) und des Hilfsgasflussraten-Einstellers (82) derart, dass die Gasflussrate in der Hilfsgasleitung (L5) erhöht wird und die Gasflussrate in der Bypassleitung (L3) vermindert wird, in Entsprechung zu einer Erhöhung der CO-Konzentration,
wobei die Gastemperatur-Steuereinrichtung (10) konfiguriert ist zum Durchführen, wenn die Kesseleinlassgastemperatur höher ist als die Zieltemperatur, einer Steuerung des Bypassflussraten-Einstellers (60) für ein Erhöhen der Gasflussrate in der Bypassleitung (L3) und/oder einer Steuerung des Hilfsgasflussraten-Einstellers (82) für ein Vermindern der Gasflussrate in der Hilfsgasleitung (L5), und wenn die Kesseleinlassgastemperatur niedriger ist als die Zieltemperatur, einer Steuerung des Bypassflussraten-Einstellers (60) für ein Vermindern der Gasflussrate in der Bypassleitung (L3) und/oder einer Steuerung des Hilfsgasflussraten-Einstellers (82) für ein Erhöhen der Gasflussrate in der Hilfsgasleitung (L5), und
wobei die Einlassflussraten-Steuereinrichtung (10) konfiguriert ist zum Durchführen, wenn das Verhältnis der Kammereinlassflussrate zu der ausgeführten Koksmenge niedriger ist als das Zielverhältnis, einer Steuerung des Zirkulationsflussraten-Einstellers (55) für ein Erhöhen der Zirkulationsflussrate und/oder einer Steuerung des Diffusionsflussraten-Einstellers (70) für ein Vermindern der Diffusionsflussrate, und wenn das Verhältnis der Kammereinlassflussrate zu der ausgeführten Koksmenge höher ist als das Zielverhältnis, einer Steuerung des Zirkulationsflussraten-Einstellers (55) für ein Vermindern der Zirkulationsflussrate und/oder einer Steuerung des Diffusionsflussraten-Einstellers (70) für ein Erhöhen der Diffusionsflussrate.

2. Koks-Trockenlöschvorrichtung nach Anspruch 1, die weiterhin umfasst:
einen Dampfflussmesser (32), der die in dem Kessel erzeugte Dampfmenge erfasst,
wobei, wenn die erzeugte Dampfmenge größer ist als eine Zielmenge, die Gastemperatur-Steuereinrichtung (10) konfiguriert ist zum Steuern des Hilfsgasflussraten-Einstellers (82) derart, dass die Gasflussrate in der Hilfsgasleitung (L5) vermindert wird, und zum Platzieren einer Standbyperiode, bis die erzeugte Dampfmenge kleiner wird als die Zielmenge.

3. Koks-Trockenlöschverfahren, das durch eine Steuereinrichtung für eine Vorrichtung (1) durchgeführt wird, die umfasst:
eine Kühlkammer (2) zum Aufnehmen eines rotglühenden Koks, zum Kühlen des rotglühenden Koks unter Verwendung eines Kühlgases und zum Ausführen des gekühlten Koks,
einen Kessel (3) zum Wiedergewinnen von Energie aus der Wärme, die der rotglühende Koks erzeugt,
eine erste Gasleitung (L1), die das Kühlgas nach dem Hindurchgehen durch den Koks in der Kühlkammer (2) zu dem Kessel (3) führt,
eine zweite Gasleitung (L2), die das Kühlgas nach dem Hindurchgehen durch den Kessel (3) zu der Kühlkammer (2) führt,
eine Bypassleitung (L3), die einen Teil des durch die zweite Gasleitung (L2) gehenden Gases zu der ersten Gasleitung (L1) führt, sodass er nicht durch die Kühlkammer (2) geht,
eine Diffusionsleitung (L4), die einen Teil des durch die zweite Gasleitung (L2) gehenden Kühlgases nach außen führt,
wobei das Verfahren umfasst:
Erhalten der Gasflussrate in der zweiten Gasleitung (L2) und an einer Position stromaufwärts von der Bypassleitung (L3) und der Diffusionsleitung (L4) als einer Zirkulationsflussrate,
Erhalten der Gasflussrate in der Bypassleitung (L3) als einer Bypassflussrate,
Erhalten der Gasflussrate in der Diffusionsleitung (L4) als einer Diffusionsflussrate,
Subtrahieren der Bypassflussrate und der Diffusionsflussrate von der Zirkulationsflussrate, um eine Kammereinlassflussrate zu berechnen und die Zirkulationsflussrate oder die Diffusionsflussrate derart einzustellen, dass sich das Verhältnis zwischen einer aus der Kühlkammer (2) ausgeführten Koksmenge und der Kammereinlassflussrate einem Zielverhältnis nähert,
Erhalten der Gastemperatur in der ersten Gasleitung (L1) als einer Kesseleinlassgastemperatur,
Verwenden einer Hilfsgasleitung (L5), die ein Sauerstoff enthaltendes Verbrennungshilfsgas zu der ersten Gasleitung (L1) führt, und
Einstellen der Gasflussraten in der Bypassleitung (L3) und der Hilfsgasleitung (L5) derart, dass sich die Kesseleinlassgastemperatur einer Zieltemperatur nähert,
Erhalten der CO-Konzentration in dem Kühlgas, und
Erhöhen der Gasflussrate in der Hilfsgasleitung (L5) und Erhöhen der Gasflussrate in der Bypassleitung (L3) in Entsprechung zu einer Erhöhung der CO-Konzentration,
wobei, wenn die Kesseleinlassgastemperatur höher ist als die Zieltemperatur, ein Erhöhen der Gasflussrate in der Bypassleitung (L3) und/oder ein Vermindern der Gasflussrate in der Hilfsgasleitung (L5) durchgeführt werden, und wenn die Kesseleinlassgastemperatur niedriger ist als die Zieltemperatur, ein Vermindern der Gasflussrate in der Bypassleitung (L3) und/oder ein Erhöhen der Gasflussrate in der Hilfsgasleitung (L5) durchgeführt werden,
wobei, wenn das Verhältnis der Kammereinflussrate zu der ausgeführten Koksmenge niedriger als das Zielverhältnis ist, ein Erhöhen der Zirkulationsflussrate und/oder ein Vermindern der Diffusionsflussrate durchgeführt werden, und wenn das Verhältnis der Kammereinlassflussrate zu der ausgeführten Koksmenge höher als das Zielverhältnis ist, ein Vermindern der Zirkulationsflussrate und/oder ein Erhöhen der Diffusionsflussrate durchgeführt werden.

4. Koks-Trockenlöschverfahren nach Anspruch 3, das weiterhin umfasst:
Erhalten der in dem Kessel (3) erzeugten Dampfmenge,
wenn die erzeugte Dampfmenge größer ist als eine Zielmenge, Vermindern der Gasflussrate in der Hilfsgasleitung (L5) und Platzieren einer Standbyperiode, bis die erzeugte Dampfmenge kleiner wird als die Zielmenge, und
nachdem die erzeugte Dampfmenge kleiner geworden ist als die Zielmenge, Einstellen der Gasflussrate in der Bypassleitung (L3) und der Hilfsgasleitung (L5), damit sich die Kesseleinlassgastemperatur der Zieltemperatur nähern kann.

## Revendications

1. Dispositif d'extinction à sec du coke (1) comprenant :
une chambre de refroidissement (2) destinée à recevoir du coke chauffé au rouge, refroidir le coke chauffé au rouge à l'aide d'un gaz de refroidissement et évacuer le coke refroidi ;
une chaudière (3) destinée à récupérer de l'énergie à partir de la chaleur générée par le coke chauffé au rouge ;
une première ligne de gaz (L1) qui guide le gaz de refroidissement qui est passé par le coke dans la chambre de refroidissement (2) jusqu'à la chaudière (3) ;
une seconde ligne de gaz (L2) qui guide le gaz de refroidissement qui est passé par la chaudière (3) jusqu'à la chambre de refroidissement (2) ;
une ligne de dérivation (L3) qui guide une partie du gaz de refroidissement passant par la seconde ligne de gaz (L2) jusqu'à la première ligne de gaz (L1) sans passer par la chambre de refroidissement (2) ;
une ligne de diffusion (L4) qui guide une partie du gaz de refroidissement passant par la seconde ligne de gaz (L2) vers l'extérieur ;
un débitmètre de circulation (54) qui détecte un débit de gaz dans la seconde ligne de gaz (L2) et un dispositif de réglage de débit de circulation (55) qui règle ce débit de gaz, le débitmètre de circulation (54) et le dispositif de réglage de débit de circulation (55) étant situés à des positions en amont de la ligne de dérivation (L3) et de la ligne de diffusion (L4) ;
un débitmètre de dérivation (61) qui détecte un débit de gaz dans la ligne de dérivation (L3) et un dispositif de réglage de débit de dérivation (60) qui règle ce débit de gaz ;
un débitmètre de diffusion (71) qui détecte un débit de gaz dans la ligne de diffusion (L4) et un dispositif de réglage de débit de diffusion (70) qui règle ce débit de gaz ;
un module de commande de débit d'entrée (10) configuré pour soustraire les débits détectés par le débitmètre de dérivation (61) et le débitmètre de diffusion (71) du débit détecté par le débitmètre de circulation (54) afin de calculer un débit d'entrée dans la chambre et de commander au moins l'un du dispositif de réglage de débit de circulation (55) et du dispositif de réglage de débit de diffusion (70) d'une manière telle qu'un rapport entre une quantité de coke évacuée de la chambre de refroidissement (2) et le débit d'entrée dans la chambre s'approche d'un rapport cible ;
une ligne de gaz auxiliaire (L5) qui guide un gaz auxiliaire de combustion contenant de l'oxygène jusqu'à la première ligne de gaz (L1) ;
un dispositif de réglage de débit de gaz auxiliaire (82) qui règle un débit de gaz dans la ligne de gaz auxiliaire ;
un thermomètre de gaz en entrée de chaudière (41) qui détecte une température de gaz dans la première ligne de gaz (L1) en tant que température de gaz en entrée de chaudière ;
un module de commande de température de gaz (10) configuré pour commander au moins l'un du dispositif de réglage de débit de dérivation (60) et du dispositif de réglage de débit de gaz auxiliaire (82) d'une manière telle que la température de gaz en entrée de chaudière s'approche d'une température cible ;
un analyseur de concentration en CO (52) qui détecte une concentration en CO dans le gaz de refroidissement,
le module de commande de température de gaz (10) étant configuré pour commander le dispositif de réglage de débit de dérivation (60) et le dispositif de réglage de débit de gaz auxiliaire (82) d'une manière telle que le débit de gaz dans la ligne de gaz auxiliaire (L5) soit augmenté et que le débit de gaz dans la ligne de dérivation (L3) soit augmenté en fonction d'une augmentation de la concentration en CO ;
le module de commande de température de gaz (10) étant configuré pour effectuer,
lorsque la température de gaz en entrée de chaudière est supérieure à la température cible, au moins l'une de commander le dispositif de réglage de débit de dérivation (60) pour augmenter le débit de gaz dans la ligne de dérivation (L3) et commander le dispositif de réglage de débit de gaz auxiliaire (82) pour diminuer le débit de gaz dans la ligne de gaz auxiliaire (L5),
tandis que lorsque la température de gaz en entrée de chaudière est inférieure à la température cible, au moins l'une de commander le dispositif de réglage de débit de dérivation (60) pour diminuer le débit de gaz dans la ligne de dérivation (L3) et commander le dispositif de réglage de débit de gaz auxiliaire (82) pour augmenter le débit de gaz dans la ligne de gaz auxiliaire (L5) ; et
le module de commande de débit d'entrée (10) étant configuré pour effectuer,
lorsque le rapport du débit d'entrée dans la chambre à la quantité de coke évacuée est inférieur au rapport cible, au moins l'une de commander le dispositif de réglage de débit de circulation (55) pour augmenter le débit de circulation et commander le dispositif de réglage de débit de diffusion (70) pour diminuer le débit de diffusion,
tandis que lorsque le rapport du débit d'entrée dans la chambre à la quantité de coke évacuée est supérieur au rapport cible, au moins l'une de commander le dispositif de réglage de débit de circulation (55) pour diminuer le débit de circulation et commander le dispositif de réglage de débit de diffusion (70) pour augmenter le débit de diffusion.

2. Dispositif d'extinction à sec du coke (1) selon l'une quelconque de la revendication 1, comprenant en outre :
un débitmètre de vapeur (32) qui détecte une quantité de vapeur produite par la chaudière (3),
où lorsque la quantité de vapeur produite est supérieure à une quantité cible, le module de commande de température de gaz (10) est configuré pour commander le dispositif de réglage de débit de gaz auxiliaire (82) d'une manière telle que le débit de gaz dans la ligne de gaz auxiliaire (L5) est abaissé et il active une période d'attente jusqu'à ce que la quantité de vapeur produite devienne inférieure à la quantité cible.

3. Procédé d'extinction de coke à sec exécuté par un module de commande d'un dispositif (1) incluant :
une chambre de refroidissement (2) destinée à recevoir du coke chauffé au rouge, refroidir le coke chauffé au rouge à l'aide d'un gaz de refroidissement et évacuer le coke refroidi ;
une chaudière (3) destinée à récupérer de l'énergie à partir de la chaleur générée par le coke chauffé au rouge ;
une première ligne de gaz (L1) qui guide le gaz de refroidissement qui est passé par le coke dans la chambre de refroidissement (2) jusqu'à la chaudière (3) ;
une seconde ligne de gaz (L2) qui guide le gaz de refroidissement qui est passé par la chaudière (3) jusqu'à la chambre de refroidissement (2) ;
une ligne de dérivation (L3) qui guide une partie du gaz de refroidissement passant par la seconde ligne de gaz (L2) jusqu'à la première ligne de gaz (L1) sans passer par la chambre de refroidissement (2) ;
une ligne de diffusion (L4) qui guide une partie du gaz de refroidissement passant par la seconde ligne de gaz (L2) vers l'extérieur ;
le procédé comprenant :
l'acquisition d'un débit de gaz dans la seconde ligne de gaz (L2) et à une position en amont de la ligne de dérivation (L3) et de la ligne de diffusion (L4) en tant que débit de circulation ;
l'acquisition d'un débit de gaz dans la ligne de dérivation (L3) en tant que débit de dérivation ;
l'acquisition d'un débit de gaz dans la ligne de diffusion (L4) en tant que débit de diffusion ;
la soustraction du débit de dérivation et du débit de diffusion du débit de circulation afin de calculer un débit d'entrée dans la chambre et le réglage du débit de circulation ou du débit de diffusion d'une manière telle qu'un rapport entre une quantité de coke évacuée de la chambre de refroidissement (2) et le débit d'entrée dans la chambre s'approche d'un rapport cible ;
l'acquisition d'une température de gaz dans la première ligne de gaz (L1) en tant que température de gaz en entrée de chaudière ;
l'utilisation d'une ligne de gaz auxiliaire (L5) qui guide un gaz auxiliaire de combustion contenant de l'oxygène jusqu'à la première ligne de gaz (L1) ; et
le réglage des débits de gaz dans la ligne de dérivation (L3) et la ligne de gaz auxiliaire (L5) d'une manière telle que la température de gaz en entrée de chaudière s'approche d'une température cible ;
l'acquisition de la concentration en CO dans le gaz de refroidissement ; et
l'augmentation du débit de gaz dans la ligne de gaz auxiliaire (L5) et l'augmentation du débit dans la ligne de dérivation (L3) en fonction d'une augmentation de la concentration en CO ;
où lorsque la température de gaz en entrée de chaudière est supérieure à la température cible, au moins l'une d'augmenter le débit de gaz dans la ligne de dérivation (L3) et de diminuer le débit de gaz dans la ligne de gaz auxiliaire (L5) est effectuée,
tandis que lorsque la température de gaz en entrée de chaudière est inférieure à la température cible, au moins l'une de diminuer le débit de gaz dans la ligne de dérivation (L3) et augmenter le débit de gaz dans la ligne de gaz auxiliaire (L5) est effectuée,
où lorsque le rapport du débit d'entrée dans la chambre à la quantité de coke évacuée est inférieur au rapport cible, au moins l'une d'augmenter le débit de circulation et de diminuer le débit de diffusion est effectuée,
tandis que lorsque le rapport du débit d'entrée dans la chambre à la quantité de coke évacuée est supérieur au rapport cible, au moins l'une de diminuer le débit de circulation et d'augmenter le débit de diffusion est effectuée.

4. Procédé d'extinction de coke à sec selon la revendication 3, comprenant en outre :
l'acquisition d'une quantité de vapeur produite par la chaudière (3) ;
lorsque la quantité de vapeur produite est supérieure à une quantité cible, la diminution du débit de gaz dans la ligne de gaz auxiliaire (L5) et l'activation d'une période d'attente jusqu'à ce que la quantité de vapeur produite devienne inférieure à la quantité cible ; et
après que la quantité de vapeur produite est devenue inférieure à la quantité cible, le réglage des débits de gaz dans la ligne de dérivation (L3) et la ligne de gaz auxiliaire (L5) pour permettre à la température de gaz en entrée de chaudière de s'approcher de la température cible.
